# EUROPÄISCHE PATENTSCHRIFT

(11) **EP 4 198 312 B1**
(45) Veröffentlichungstag und Bekanntmachung des Hinweises auf die Patenterteilung: **02.04.2025**
(21) Anmeldenummer: 22212160.0
(22) Anmeldetag: 08.12.2022
(51) Int. Cl.: F04C 2/344, F04C 15/00

(54) **PUMPE MIT KONTROLLBEREICH FÜR EINE FÜLLMASCHINE**
PUMP WITH CONTROL AREA FOR A FILLING MACHINE
POMPE AVEC ZONE DE CONTRÔLE POUR UNE MACHINE DE REMPLISSAGE

(30) Priorität: 17.12.2021 DE 102021133696
(43) Veröffentlichungstag der Anmeldung: 21.06.2023
(73) Patentinhaber: VEMAG Maschinenbau GmbH, 27283 Verden/Aller (DE)
(72) Erfinder: Masemann, Florian, 27339 Riede (DE); Hemmje, Holger, 27283 Verden (DE); Rajes, Markus, 27330 Asendorf (DE)
(74) Vertreter: Eisenführ Speiser

(56) Entgegenhaltungen:
- EP-A1- 1 829 451
- EP-A2- 0 924 428
- DE-A1- 3 714 243
- US-A1- 2003 015 840
- US-A1- 2014 199 162

## Beschreibung

Die vorliegende Erfindung betrifft eine Pumpe, insbesondere eine Flügelzellen-Pumpe, für eine Füllmaschine, mit einem Verarbeitungsbereich mit einer Förderkammer zum Aufnehmen einer pastösen Masse, beispielsweise einer Lebensmittelmasse, und einem Rotor zum Fördern der pastösen Masse durch die Förderkammer; einem Getriebebereich mit einer Getriebelagerung, einer Antriebswelle zum Antreiben des Rotors, insbesondere mit einem abtriebsseitigen Endabschnitt, der sich in den Verarbeitungsbereich erstreckt, und einem antriebsseitigen Abschnitt, der sich in den Getriebebereich erstreckt, wobei der antriebsseitige Endabschnitt mit der Getriebelagerung und der abtriebsseitige Endabschnitt mit dem Rotor drehgebend gekoppelt ist, die sich von dem Lebensmittelbereich in den Getriebebereich in einer Längsrichtung erstreckt; und einem in Längsrichtung zwischen den Verarbeitungsbereich und den Getriebebereich angeordneten Dichtbereich zum fluiddichten Trennen des Verarbeitungsbereichs von dem Getriebebereich, wobei der Dichtbereich eine benachbart zu dem Verarbeitungsbereich bzw. dem abtriebsseitigen Endabschnitt angeordnete Primärdichtung, mindestens eine in Längsrichtung beabstandet zu der Primärdichtung angeordnete Sekundärdichtung und einen Versorgungskanal zur Bereitstellung eines Kontrollmediums zur Schmierung der ersten und der Sekundärdichtung umfasst.

Pumpen der vorstehenden Art sind allgemein bekannt. Beispiele für solche Pumpen sind Verdränger-Pumpen, wie Drehschieberpumpen, auch bezeichnet als Flügelzellen-Pumpen. Die Förderkammer solcher Pumpen ist zur Aufnahme des Rotors ausgebildet, wobei ein Rotor drehbar in der Förderkammer gelagert ist. Die Förderkammer weist zumeist einen Einlass zum Einlassen von pastöser Masse und einen Auslass zum Auslassen der pastösen Masse auf. Der Rotor umfasst bevorzugt ein oder mehrere, meist radial angeordnete Führungen zur Aufnahme von Drehschiebern bzw. Flügeln, welche den Raum zwischen Rotor und Förderkammer in mehrere Kammern unterteilen und vorzugsweise ein Exzenterstück, welches mit dem Rotor gekoppelt und zum Positionieren der Flügel eingerichtet ist.

Der Verarbeitungsbereich stellt dabei den Bereich dar, in dem die pastöse Masse zur Weiterverarbeitung gefördert wird. Im Falle einer Nahrungsmittelmaschine stellt der Verarbeitungsbereich dabei den Lebensmittelbereich dar, also den Bereich, in dem die pastöse Masse, wobei es sich um ein Lebensmittel handelt, verarbeitet wird.

Der Getriebebereich und der Verarbeitungsbereich müssen im Betrieb fluiddicht voneinander getrennt werden, um sowohl das Getriebe vor Schäden durch aus dem Verarbeitungsbereich austretende pastöse Masse, beispielsweise Lebensmittel zu schützen, als auch den Verarbeitungsbereich vor einer Verunreinigung durch Kontrollmedium mit Schmiereigenschaft oder Getriebeöle bzw. Getriebefette aus dem Getriebebereich und/oder Dichtbereich zu schützen. Aus diesem Grund ist zumeist ein Dichtbereich mit einer Primärdichtung und einer Sekundärdichtung vorgesehen, welcher zwischen dem Verarbeitungsbereich und dem Getriebebereich angeordnet ist.

Aus der Druckschrift DE 37 14 243 A1 ist eine Pumpe zum Fördern schmelzflüssiger Polymere bekannt, die die Merkmale des Oberbegriffs von Anspruch 1 aufweist.

Eine Füllmaschine zum Abfüllen von pastöser Masse ist in der Druckschrift EP 1 829 451 A1 offenbart.

Unter einem Kontrollmedium wird vorliegend ein Medium mit einer Schmiereigenschaft verstanden, welches dazu eingerichtet ist, die Lebensdauer der jeweiligen Dichtung durch eine Schmierung dieser zu erhöhen. Wird dieses Kontrollmedium bevorzugt wieder aufgefangen und einer sensorischen Prüfung und/oder einer Sichtprüfung unterzogen, so ermöglicht dies die Kontrolle des Dichtbereichs auf etwaige Verunreinigungen. Unter einer Schmiereigenschaft wird vorliegend verstanden, dass das Kontrollmedium dazu geeignet und eingerichtet ist, eine Schmierwirkung beim Kontakt mit den Dichtungen zu erzielen, welche eine Steigerung der Lebensdauer der Dichtung u.a. durch die Steigerung der Abriebfestigkeit erzielen und kleinere Unebenheiten auf der Oberfläche der Dichtungen ausgleichen. Die Primärdichtung und die Sekundärdichtung sind dabei bevorzugt Elastomer-Dichtungen.

Unter einer pastösen Masse wird im Sinne der Erfindung ein förderfähiges und vorzugsweise fließfähiges Medium verstanden, wie Lebensmittelmassen verschiedener Art, beispielsweise Brätmasse, Teige, Käse sowie vegane oder vegetarische Lebensmittelmassen oder Kosmetika oder fließ- bzw. förderfähige chemische Substanzen und insbesondere Mischungen aus Flüssigkeiten mit Feststoffen jeglicher Art.

Trotzdem kann es kann im Betrieb zur Leckage und damit zu Schäden an den Dichtungen kommen, beispielsweise aufgrund einer unzureichenden Versorgung der Primärdichtung und der Sekundärdichtung mit einem entsprechenden Kontrollmedium mit Schmiereigenschaft. Sofern dabei lediglich die Primärdichtung beschädigt ist, tritt Kontrollmedium mit Schmiereigenschaft aus dem Dichtbereich in den Verarbeitungsbereich ein. Dies ist durch den sichtbaren Eintritt von Kontrollmedium in die Förderkammer beim Reinigen der Pumpe durch das Bedienpersonal feststellbar. Hingegen bleibt insbesondere eine Leckage der Sekundärdichtung im Betrieb unbemerkt, da der Getriebebereich im laufenden Betrieb nicht einsehbar ist und auch nicht anderweitig überwacht wird. Daher kommt es zu einem plötzlichen Eintritt von Kontrollmedium mit Schmiereigenschaft aus dem Dichtbereich in den Getriebebereich. Dies ist auch durch eine Überwachung des aus dem Dichtbereich abgeführten Kontrollmediums nicht feststellbar. Sofern dann auch noch die Primärdichtung beschädigt ist, tritt plötzlich aufgrund des hohen Drucks im Verarbeitungsbereich und insbesondere in der Förderkammer neben dem Kontrollmedium auch pastöse Masse aus dem Verarbeitungsbereich in den Getriebebereich ein. Dabei ist lediglich das Versagen der Primärdichtung durch die Prüfung des aus dem Dichtbereich abgeführten Kontrollmediums feststellbar, nicht aber das Versagen der Sekundärdichtung und damit die frühzeitige Detektion einer Leckage, die erste Schäden am Getriebe verursachen könnte. Da der Eintritt von Kontrollmedium bzw. Kontrollmedium und pastöser Masse Schäden am Getriebe verursacht, ist dies unbedingt zu vermeiden bzw. die Pumpe umgehend abzuschalten.

Der Erfindung lag daher die Aufgabe zugrunde, zumindest einen der aus dem Stand der Technik bekannten Nachteile zu beheben. Insbesondere lag der Erfindung die Aufgabe zugrunde bei einer Pumpe der eingangs genannten Art das Risiko einer Leckage zu minimieren und im Falle einer Leckage Schäden am Getriebe und vorzugsweise eine Kontamination des Verarbeitungsbereichs zu verhindern.

Die vorliegende Erfindung löst diese Aufgabe in einem ersten Aspekt durch eine Pumpe nach Anspruch 1. Insbesondere schlägt die Erfindung vor, dass der Dichtbereich ferner eine benachbart zu dem Getriebebereich angeordnete Kontrolldichtung und einen der Kontrolldichtung zugeordneten Kontrollbereich umfasst, wobei der Kontrollbereich der Kontrolldichtung derart, vorzugsweise in Längsrichtung, vorgeschaltet angeordnet ist, dass aus dem Verarbeitungsbereich austretende pastöse Masse und/oder die Sekundärdichtung passierendes Kontrollmedium, erst den Kontrollbereich und anschließend die Kontrolldichtung passiert.

Damit wird gleichzeitig ein vergrößerter Dichtbereich durch die Kontrolldichtung vorgesehen und die Sicherheit gegenüber einer Leckage erhöht. Bei bekannten Pumpen würde eine Leckage nach dem Passieren der Sekundärdichtung durch das austretende Medium, beispielsweise pastöse Masse, aus dem Verarbeitungsbereich bereits zu einer Beschädigung bzw. Verunreinigung des Getriebes führen. Die Erfindung schlägt demgegenüber eine Kontrolldichtung mit Kontrollbereich vor, wodurch die Möglichkeit zur Erkennung einer Leckage vor einer Verunreinigung und ggf. Beschädigung des Getriebes geschaffen wird. Die Erkennung erfolgt beispielsweise durch Detektieren eines in diesen Bereich gelangenden oder in diesem Bereich befindlichen Mediums, insbesondere Kontrollmediums, bzw. durch die Entnahme des in diesen Bereich gelangenden oder in diesem Bereich befindlichen Mediums und anschließende Untersuchung. Auch das Vorsehen von Abführschläuchen, zur Ausleitung von Mediums, insbesondere Kontrollmedium, in diesem Bereich ist erfindungsgemäß möglich. Es ist erfindungsgemäß auch vorgesehen, dass nicht nur eine, sondern zwei oder mehr Kontrolldichtungen mit zugeordnetem Kontrollbereich vorgesehen sind.

Ferner erkennt die Erfindung, dass die Kontrolldichtung mit zugeordnetem Kontrollbereich gleichzeitig dazu führt, dass auch in Richtung des Verarbeitungsbereichs Medium, beispielsweise Getriebeöl aus dem Getriebebereich, zunächst die Kontrolldichtung und den Kontrollbereich und anschließend weitere Dichtungen, nämlich die Primärdichtung und die Sekundärdichtung des Dichtbereichs passieren muss. In Richtung des Verarbeitungsbereichs ist die Sicherheit gegenüber einer Kontamination der pastösen Masse durch insgesamt zwei nachgeschaltete Dichtungen somit noch zusätzlich erhöht. Der Kontrollbereich schafft damit die Möglichkeit zum frühzeitigen Erkennen einer solchen Leckage und der anschließenden Veranlassung entsprechender Maßnahmen zur Reinigung und/oder Wartung der Pumpe.

Vorzugsweise weist der Kontrollbereich eine Kontrollöffnung zur Entnahme und Untersuchung von Medium aus dem Kontrollbereich auf. Somit kann über die Kontrollöffnung Medium entnommen und beispielsweise einer Sichtprüfung unterzogen werden. Damit wird es möglich, das Vorhandensein von Kontrollmedium in diesen Bereich gelangenden oder in diesem Bereich befindlichen Mediums zu erkennen und sofern dauerhaft eine definierte Menge von Kontrollmedium im Kontrollbereich vorhanden ist, Verunreinigungen in dem Kontrollmedium im Kontrollbereich, welche beispielsweise pastöse Masse und/oder Getriebeöl sein können, zu identifizieren. Bei einer solchen Kontrollöffnung kann es sich beispielsweise auch um einen Spalt, beispielsweise im Bereich der Lagerung des Rotors, handeln.

Erfindungsgemäß kann im Kontrollbereich bevorzugt auch eine vordefinierte Menge des Kontrollmediums mit Schmiereigenschaft bereitgestellt werden, welche entnommen und auf eventuelle Rückstände durch pastöse Masse oder Getriebeöle untersucht werden kann. Vorzugsweise umfasst der Kontrollbereich dafür ein Reservoir, in welchem die definierte Menge des Kontrollmediums aufgefangen wird. Eine solche vordefinierte Menge ermöglicht die Prüfung auf Verunreinigungen und damit einen höheren Informationsgehalt bzgl. der Leckage dahingehend, welche der Dichtungen beschädigt ist.

Gemäß einer weiteren bevorzugten Ausführungsform weist die Pumpe eine mit der Kontrollöffnung verbundenen Leitung, insbesondere einen Abführschlauch zum Ableiten von Medium, insbesondere im Kontrollbereich, aus dem Kontrollbereich auf. Somit kann das Medium aus dem Kontrollbereich in einfacher Weise durch ein Gehäuse der Pumpe hin zu einem einfach zugänglichen Bereich geleitet werden, in welchen es abgegeben, aufgefangen oder anderweitig entnommen bzw. lediglich einer Sichtprüfung unterzogen werden kann.

Vorzugsweise weist der Kontrollbereich eine Sensoreinheit zum Detektieren von Medium in dem Kontrollbereich auf. Im Sinne der Erfindung kann die Sensoreinheit Medium im Kontrollbereich detektieren oder mit der Leitung derart korrespondieren, dass es das Medium in der Leitung detektiert bzw. bevorzugt das durch die Leitung abgeführten Medium in einem Reservoir. Somit kann die Überprüfung und Detektion von Medium im Kontrollbereich automatisiert mittels einer Sensoreinheit erfolgen.

Alternativ kann die Sensoreinheit im Sinne der Erfindung dazu eingerichtet sein, eine Menge an Medium zu detektieren und ein Sensorsignal bereitzustellen, wenn die detektierte Menge an Medium einen vordefinierten Grenzwert überschreitet. Vorzugsweise ist die Sensoreinheit mit einer Benutzerschnittstelle und/oder einem Datenspeicher signalleitend verbunden, wobei die Benutzerschnittstelle und/oder der Datenspeicher dazu eingerichtet ist, den vordefinierten Grenzwert bereitzustellen.

Gemäß einer alternativen bevorzugten Ausführungsform weist der Kontrollbereich eine Sensoreinheit zum Detektieren von Verunreinigungen des Mediums in dem Kontrollbereich auf, wobei in dem Kontrollbereich, insbesondere in einem Reservoir, eine vordefinierte Menge an Medium aufgefangen und durch die Sensoreinheit überwacht wird.

Die Sensoreinheit ist bevorzugt mit einer Steuerung gekoppelt, welche die Sensorsignale auswertet. Bei der Steuerung kann es sich bevorzugt um die Pumpensteuerung handeln.

Vorzugsweise umfasst die Sensoreinheit mindestens einen der folgenden Sensoren: kapazitiver Sensor, Näherungsschalter, Feuchtigkeitssensor, optischer Sensor, Drucksensor, und Temperatursensor. Durch jeden der vorstehend genannten Sensoren kann das Vorhandensein von Medium im Kontrollbereich und/oder einem mit dem Kontrollbereich kooperierenden Reservoir sicher erfasst werden. Beispielsweise führt das Vorhandensein von Medium zu einer Temperaturdifferenz und einer Druckdifferenz, welche von den entsprechenden Sensoren erfasst werden kann. Bevorzugt weist die Sensoreinheit mindestens zwei Sensoren auf. Besonders bevorzugt sind mindestens zwei verschiedene Sensoren miteinander kombiniert, sodass bei einer Fehlfunktion eines Sensors, der jeweils andere noch sicher das Vorhandensein von Medium im Kontrollbereich detektieren kann. Somit wird die Ausfallsicherheit erhöht. Besonders bevorzugt sind mindestens zwei verschiedene Arten von Sensoren vorgesehen.

Weiter bevorzugt ist der Kontrollbereich konzentrisch zu der Antriebswelle ausgebildet. Somit erstreckt sich der Kontrollbereich gleichmäßig um die Antriebswelle herum und ermöglicht somit die Kontrolle entlang des gesamten äußeren Umfangs der Antriebswelle und der sich um die Antriebswelle erstreckenden Primärdichtung, der Sekundärdichtung und der Kontrolldichtung. Alternativ ist der Kontrollbereich exzentrisch angeordnet und weist beispielsweise einen vergrößerten Raum zur Aufnahme einer Sensoreinheit auf.

Gemäß einer bevorzugten Ausführungsform ist die Kontrolldichtung eine RadialWellendichtung und/oder eine Stopfbuchse. Radial-Wellendichtungen werden mit festem Sitz im Gehäuse oder Gehäusedeckel einbaut und weisen zumeist eine Dichtlippe auf. Die Dichtlippe verläuft bevorzugt entlang der Oberfläche der sich drehenden Antriebswelle und wird bevorzugt von einer Feder, beispielsweise einer Schlauchfeder, radial auf die Oberfläche der Antriebswelle gedrückt. Das Gehäuse ist bevorzugt ein dem Getriebebereich zugeordneter Gehäuseteil der Pumpe. Unter einer Stopfbuchse wird ein Dichtmaterial, welches beispielsweise Filz umfasst, verstanden. Sie besteht aus einer Stopfbuchspackung, welche das Dichtmaterial umfasst, und einer Stopfbuchsbrille, welche als flanschähnliche Hülse ausgebildet ist. Die Stopfbuchsbrille ist bevorzugt mit der Stopfbuchspackung mittels Schrauben oder Federn axial verpresst. Das Dichtmaterial ist bevorzugt ein elastisches Dichtmaterial, welches durch die axiale Pressung auch eine radiale Pressung erfährt, sodass der Dichtspalt zwischen einem Gehäuseteil des Getriebebereichs und der Antriebswelle abgedichtet wird.

Weiter bevorzugt ist die Kontrolldichtung zwischen Antriebswelle und der Getriebelagerung und/oder zwischen der Antriebswelle und einem Gehäuseteil angeordnet und liegt an dem äußeren Umfang der Antriebswelle dichtend an. Somit wird die Antriebswelle sicher gegenüber dem Getriebebereich, insbesondere der Getriebelagerung abgedichtet.

Gemäß einer bevorzugten Ausführungsform ist der Versorgungskanal als ein Ringkanal korrespondierend, insbesondere konzentrisch zu der Antriebswelle ausgebildet. Weiter bevorzugt weist der Ringkanal eine Einlassöffnung zum Einführen von Kontrollmedium mit Schmiereigenschaft und eine Abführöffnung zum Abführen von Medium, insbesondere Kontrollmedium mit Schmiereigenschaft, auf und ist vorzugsweise zwischen der ersten und der Sekundärdichtung angeordnet. Durch den Ringkanal, welcher korrespondierend zu der Antriebswelle ausgebildet ist, können die Primärdichtung und die Sekundärdichtung zuverlässig mit Kontrollmedium mit Schmiereigenschaft versorgt werden, um deren Lebensdauer zu erhöhen. Durch die bevorzugt konzentrische Ausbildung, erstreckt sich der Ringkanal gleichmäßig um die Antriebswelle und ist auf diese Weise besonders einfach und platzsparend in die Pumpe zu integrieren.

Gemäß einer weiteren bevorzugten Ausführungsform ist die Kontrolldichtung eine erste Kontrolldichtung und der Kontrollbereich ein erster Kontrollbereich und der Dichtbereich mindestens eine zweite Kontrolldichtung auf, wobei der zweiten Kontrolldichtung bevorzugt ein zweiter Kontrollbereich zugeordnet ist. Bevorzugt ist der zweite Kontrollbereich der zweiten Kontrolldichtung derart in Längsrichtung vorgeschaltet angeordnet, dass aus dem Verarbeitungsbereich austretende pastöse Masse und/oder aus dem Dichtbereich austretendes Kontrollmedium mit Schmiereigenschaft jeweils erst den zweiten Kontrollbereich und anschließend die zweite Kontrolldichtung passiert. Bevorzugt sind der erste Kontrollbereich und die erste Kontrolldichtung benachbart zu der Sekundärdichtung angeordnet und der zweite Kontrollbereich mit der zweiten Kontrolldichtung benachbart zu dem Getriebebereich angeordnet. Somit wird mindestens ein zusätzlicher Kontrollbereich bereitgestellt, welche eine genauere Erfassung einer Leckage und des Fortschritts der Leckage zulässt. Somit kann durch die zwei getrennten Kontrollbereiche Medium in einem ersten Kontrollbereich detektiert werden, beispielsweise durch Entnahme mittels einer Kontrollöffnung oder Detektion mittels einer Sensoreinheit. Gleichzeitig kann die Information bereitgestellt werden, dass das Medium noch nicht bis in den zweiten Kontrollbereich vorgedrungen ist. Auch dies kann beispielsweise durch Entnahme mittels einer Kontrollöffnung oder einer Sensoreinheit erfolgen. Somit können frühzeitig Maßnahmen, wie Wartungsintervalle geplant werden, aufgrund der Detektion der Leckage im zweiten Kontrollbereich.

Die Erfindung wurde vorstehend in einem ersten Aspekt in Bezug auf eine Pumpe beschrieben. In einem zweiten Aspekt betrifft die vorliegende Erfindung eine Füllmaschine zum Abfüllen pastöser Masse, insbesondere Lebensmittelmassen. Die Füllmaschine umfasst eine Pumpe gemäß dem ersten Aspekt der Erfindung, einen mit der Förderkammer der Pumpe fluidleitend verbundenen Trichter zum Zuführen der pastösen Masse in die Förderkammer und eine mit der Förderkammer der Pumpe fluidleitend verbundene Ausgabeeinrichtung zum Abführen der pastösen Masse aus der Förderkammer. Dadurch, dass die Füllmaschine eine Pumpe gemäß dem ersten Aspekt der Erfindung umfasst, macht sie sich die vorstehend in Bezug auf den ersten Aspekt der Erfindung beschriebenen Vorteile zu Eigen. Bevorzugte Ausführungsformen und Beispiele in Bezug auf den ersten Aspekt der Erfindung sind ebenso bevorzugte Ausführungsform und Beispiele in Bezug auf den zweiten Aspekt der Erfindung.

Gemäß einer bevorzugten Ausführungsform der Füllmaschine weist der Kontrollbereich eine Sensoreinheit zum Detektieren von Medium in dem Kontrollbereich auf, wobei die Sensoreinheit mindestens einen der folgenden Sensoren umfasst: kapazitiver Sensor, Näherungsschalter, Feuchtigkeitssensor, optischer Sensor, Drucksensor oder Temperatursensor. Die Füllmaschine umfasst dabei ferner einer Steuerung, die mit der Sensoreinheit signalleitend verbunden und dazu eingerichtet ist, die Sensorsignale auszuwerten und ein Alarmsignal bereitzustellen, wenn Medium in den Kontrollbereich erfasst wird und/oder wenn die im Kontrollbereich detektierte Menge von Medium bzw. der detektierte Grad der Verunreinigung des Mediums einen vordefinierten Grenzwert übersteigt. Somit wird eine Leckage nicht nur lediglich erkannt, sondern gleichzeitig auch ein Alarmsignal bereitgestellt, um die Bediener der Füllmaschine frühzeitig zu alarmieren. Damit wird insbesondere sichergestellt, dass im laufenden Betrieb eine Leckage nicht unbemerkt bleibt, da die Bediener mittels des Alarmsignals in geeigneter Weise alarmiert werden.

Vorzugsweise umfasst die Füllmaschine ferner eine mit der Steuerung signalleitend verbundene Anzeigeeinheit zum Anzeigen einer Warnmeldung, in Reaktion auf ein von der Steuerung bereitgestelltes Alarmsignal. Durch eine Warnmeldung wird der Bediener der Füllmaschine in geeigneter Weise über die erfasste Leckage informiert. Bevorzugt enthält eine solche Warnmeldung Hinweise zu der benötigten Wartung und entsprechenden Maßnahmen und bevorzugt Informationen bezüglich einer zulässigen Restbetriebsdauer, während welcher die Kontamination der pastösen Masse bzw. die Verunreinigung des Getriebes sicher vermieden werden kann.

Weiter bevorzugt umfasst die Füllmaschine eine mit der Steuerung signalleitend verbundene Alarmeinheit zum Bereitstellen eines optischen und/oder akustischen Alarms, in Reaktion auf ein von der Steuerung bereitgestelltes Alarmsignal. Durch die Bereitstellung eines optischen oder akustischen Alarms werden die Bediener der Füllmaschine auch in größerer Distanz zu der Füllmaschine in geeigneter Weise alarmiert und über die detektierte Leckage informiert, sodass diese entsprechende Schritte einleiten können. Vorzugsweise werden die zu ergreifenden Maßnahmen als Warnmeldung auf der Anzeigeeinheit angezeigt.

Gemäß einer weiteren bevorzugten Ausführungsform umfasst die Füllmaschine ferner eine mit der Steuerung signalleitend verbundene Verzögerungsschaltung zum Vorgeben einer Verzögerungszeit, in Reaktion auf ein von der Steuerung bereitgestelltes Alarmsignal, wobei die Steuerung dazu eingerichtet ist, den Betrieb der Füllmaschine nach Ablauf der Verzögerungszeit zu unterbrechen. Die Verzögerungszeit ist bevorzugt derart gewählt, dass während der Verzögerungszeit der Betrieb der Füllmaschine fortgesetzt werden kann, ohne dass es zu einer Kontamination der pastösen Masse bzw. zu einer Verunreinigung des Getriebebereichs kommt. Wird nach Bereitstellung des Alarmsignals während dieser Zeit keine entsprechende Maßnahme zur Wartung und/oder Reinigung der Füllmaschine ergriffen, wird der Betrieb durch die Steuerung unterbrochen, um irreparable Schäden beispielsweise einer Nahrungsmittelmaschine zu vermeiden bzw. die Herstellung von verunreinigten und potentiell gesundheitsgefährdenden Produkten, insbesondere Lebensmittelprodukten.

Gemäß einem dritten Aspekt betrifft die vorliegende Erfindung ein Verfahren zum Betrieb einer Füllmaschine, insbesondere einer Füllmaschine gemäß dem zweiten Aspekt der Erfindung. Das Verfahren umfasst die Schritte: Aufnehmen und Fördern einer pastösen Masse in einer Förderkammer und Fördern der pastösen Masse durch die Förderkammer mittels eines drehgebend mit einer Antriebswelle gekoppelten Rotors, wobei die Förderkammer und der Rotor einem Verarbeitungsbereich der Füllmaschine zugeordnet sind, und wobei sich die Antriebswelle von dem Verarbeitungsbereich in den Getriebebereich in einer Längsrichtung erstreckt, insbesondere mit einem abtriebsseitigen Endabschnitt in den Verarbeitungsbereich erstreckt und sich mit einem antriebsseitigen Endabschnitt in den Getriebebereich erstreckt, Bereitstellen von Kontrollmedium mit Schmiereigenschaft in einem Dichtbereich zur Schmierung einer Primärdichtung und einer Sekundärdichtung mittels eines Versorgungskanals, und Detektieren von Medium, insbesondere Kontrollmedium mit Schmiereigenschaft und/oder pastöser Masse in einem einer Kontrolldichtung, zugeordneten Kontrollbereich, wobei die Kontrolldichtung benachbart zu einem Getriebebereich der Füllmaschine angeordnet ist und der Kontrollbereich der Kontrolldichtung derart in Längsrichtung vorgeschaltet angeordnet ist, dass aus dem Verarbeitungsbereich austretendes Medium erst den Kontrollbereich und anschließend die Kontrolldichtung passiert. Durch den Schritt des Detektierens von Medium, insbesondere Kontrollmedium und/oder pastöser Masse, in einem einer Kontrolldichtung zugeordneten Kontrollbereich einer Füllmaschine, macht sich das Verfahren zum Betrieb einer Füllmaschine die vorstehend in Bezug auf den ersten Aspekt der Erfindung beschriebenen Vorteile zu Eigen. Beispiele und bevorzugte Ausführungsformen der Füllmaschine gemäß dem ersten Aspekt der Erfindung sind ebenso bevorzugte Ausführungsformen und Beispiele in Bezug auf den dritten Aspekt der Erfindung.

Die Erfindung wird im Folgenden anhand bevorzugter Ausführungsbeispiele unter Bezugnahme auf die beigefügten Figuren beschrieben.
- Figur 1: zeigt eine schematische Darstellung einer erfindungsgemäßen Füllmaschine;
- Figur 2: zeigt eine erste Ausführungsform einer Pumpe schematisch in einer Schnittansicht;
- Figur 3: zeigt eine zweite Ausführungsform einer Pumpe schematisch in einer Schnittansicht;
- Figur 4: zeigt eine dritte Ausführungsform einer Pumpe schematisch in einer Schnittansicht.

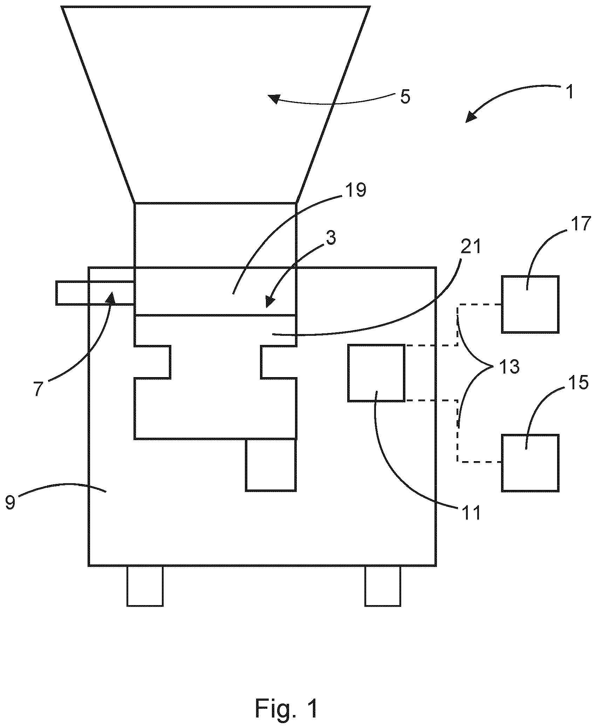

Die in Fig. 1 gezeigte Füllmaschine 1 umfasst eine Pumpe 3 zum Fördern einer pastösen Masse, einen mit der Pumpe 3 verbundenen Trichter 5 zum Zuführen der pastösen Masse und eine mit der Pumpe 3 verbundene Ausgabeeinrichtung 7 zum Abführen der pastösen Masse aus der Pumpe 3.

Die Pumpe 3 ist in einem Gehäuse 9 angeordnet. Ferner ist die Abführeinheit 7 zumindest abschnittsweise in dem Gehäuse 9 angeordnet.

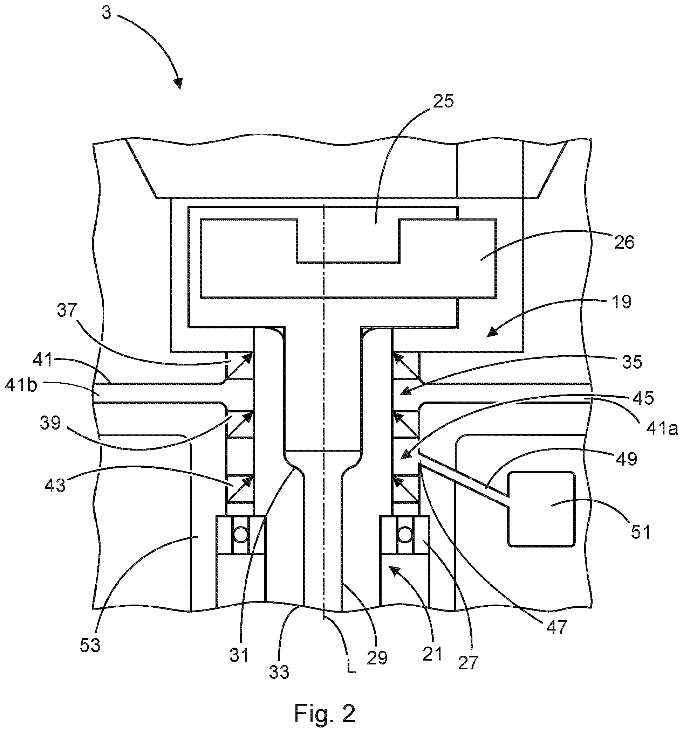

Die Pumpe 3 umfasst einen Verarbeitungsbereich 19, in welchem die pastöse Masse verarbeitet wird, und einen Getriebebereich 21, welcher ein entsprechendes Getriebe umfasst (vgl. Fig. 2 bis 4).

Ferner umfasst die Füllmaschine 1 bevorzugt eine Steuerung 11. Die Steuerung 11 ist dazu eingerichtet, ein Alarmsignal bereitzustellen, wenn eine Leckage auftritt und pastöse Masse aus dem Verarbeitungsbereich 19 in den Getriebebereich 21 gelangen kann bzw. wenn Getriebeflüssigkeit aus dem Getriebebereich 21 in den Verarbeitungsbereich 19 gelangen kann.

Die Detektion des Mediums erfolgt in einem Kontrollbereich (vgl. Fig. 2 bis 4) und kann dabei entweder durch Bedienpersonal der Füllmaschine 1 erfolgen, beispielsweise durch eine Sichtprüfung, oder durch eine Sensoreinheit (nicht gezeigt). Die Sensoreinheit kann beispielsweise einen kapazitiven Sensor, einen Näherungsschalter, einen Feuchtigkeitssensor, einen optischen Sensor, einen Drucksensor oder einen Temperatursensor bzw. eine Kombination einer beliebigen Anzahl solcher Sensoren umfassen. Die Sensoreinheit ist bevorzugt mit der Steuerung 11 verbunden und weiter bevorzugt in oder an dem Gehäuse 9 angeordnet.

Weiter bevorzugt ist die Steuerung 11 über Signalleitungen 13 mit einer Anzeigeeinheit 15 und vorzugsweise auch einer Alarmeinheit 17 verbunden. Die Anzeigeeinheit 15 ist dazu eingerichtet, eine Warnmeldung anzuzeigen, wenn die Steuerung 11 ein Alarmsignal bereitstellt.

Die Alarmeinheit 17 ist dazu eingerichtet, einen optischen und/oder einen akustischen Alarm bereitzustellen, wenn die Steuerung 11 ein entsprechendes Alarmsignal bereitstellt. Vorzugsweise kann ein erstes Alarmsignal durch die Steuerung 11 bereitgestellt werden, welches die Alarmeinheit 17 veranlasst, einen akustischen Alarm bereitzustellen und ein zweites Alarmsignal, welches die Alarmeinheit 17 veranlasst, einen optischen Alarm bereitzustellen.

Fig. 2 zeigt eine erste Ausführungsform der Pumpe 3. Die Pumpe 3 umfasst einen Verarbeitungsbereich 19 und einen Getriebebereich 21. Ferner umfasst die Pumpe 3 einen in einer Förderkammer 23 angeordneten Rotor 25 und einen oder mehrere lösbar mit dem Rotor 25 gekoppelte Flügel 26. Die Flügel 26 sind dazu eingerichtet, im Verarbeitungsbereich 19 mit einem Medium in Kontakt zu kommen und dieses in Richtung der Ausgabeeinrichtung 7 (vgl. Fig. 1) zu fördern.

In dem Getriebebereich 21 ist mittels einer Getriebelagerung 27 eine Antriebswelle 29 drehbar gelagert. Die Antriebswelle 29 erstreckt sich in einer Längsrichtung L.

Die Antriebswelle 29 weist einen abtriebsseitigen Endabschnitt 31 auf, welcher mit dem Rotor 25 gekoppelt ist und zumindest abschnittsweise in den Verarbeitungsbereich 19 reicht. Die Antriebswelle 29 weist ferner einen antriebsseitigen Endabschnitt 33 auf, welcher sich in den Getriebebereich 21 erstreckt.

Zwischen dem Verarbeitungsbereich 19 und dem Getriebebereich 21 weist die Pumpe 3 einen Dichtbereich 35 auf. Der Dichtbereich 35 ist bevorzugt in Längsrichtung L zwischen dem Verarbeitungsbereich 19 und dem Getriebebereich 21 angeordnet und dazu eingerichtet, den Verarbeitungsbereich 19 fluiddicht von dem Getriebebereich 21 zu trennen.

Der Dichtbereich 35 weist eine Primärdichtung 37 auf, welche benachbart zu dem Verarbeitungsbereich 19 angeordnet ist. Vorzugsweise weist der Dichtbereich 35 ferner eine Sekundärdichtung 39 auf, welche in Längsrichtung L beabstandet zu der Primärdichtung 37 angeordnet ist.

Zwischen der Primärdichtung 37 und der Sekundärdichtung 39 ist bevorzugt ein Versorgungskanal 41 angeordnet, welcher dazu eingerichtet ist, die Primärdichtung 37 und/oder die Sekundärdichtung 39 mit einem Kontrollmedium mit Schmiereigenschaft, insbesondere einem Dichtfett, zu versorgen. In der in Fig. 2 gezeigten bevorzugten Ausführungsform ist der Versorgungskanal 41 als Ringkanal ausgebildet, welcher sich in Längsrichtung L zwischen der Primärdichtung 37 und der Sekundärdichtung 39 um die Antriebswelle 29 herum erstreckt. Der Ringkanal 41 weist einen Einlassabschnitt 41a zum Einlassen des Kontrollmediums mit Schmiereigenschaft in den Ringkanal 41 und einem Auslassabschnitt 41b zum Abgeben des Kontrollmediums mit Schmiereigenschaft aus dem Ringkanal 41 auf. Bevorzugt ist der Einlassabschnitt 41a mit einer Zuführleitung (nicht gezeigt), insbesondere einem Zuführschlauch verbunden, die dazu eingerichtet ist, Kontrollmedium mit Schmiereigenschaft von einer Versorgungseinheit (nicht gezeigt), insbesondere einer Pumpe, zu dem Einlassabschnitt 41a zu leiten. Bevorzugt ist der Auslassabschnitt 41b mit einer Abführleitung (nicht gezeigt), insbesondere einem Abführschlauch verbunden, die dazu eingerichtet ist, Kontrollmedium mit Schmiereigenschaft von dem Versorgungskanal 41 abzuführen.

Der Dichtbereich 35 weist ferner eine Kontrolldichtung 43 auf, welche benachbart zum Getriebebereich 21 angeordnet ist. Der Kontrolldichtung 43 ist ein Kontrollbereich 45 zugeordnet.

Der Kontrollbereich 45 weist bevorzugt eine Kontrollöffnung 47 auf, welche dazu eingerichtet ist, die Entnahme von Medium aus dem Kontrollbereich 45 zu ermöglichen.

In der gezeigten Ausführungsform ist die Kontrollöffnung 47 mit einer Leitung 49, beispielsweise einem Abführschlauch, fluidleitend verbunden. Die Leitung 49 ist dazu eingerichtet, Flüssigkeit aus dem Kontrollbereich 45 zu einer Sensoreinheit 51 hinzuleiten. Die Sensoreinheit 51 ist dazu eingerichtet, das Vorhandensein von Flüssigkeit in dem Kontrollbereich 45 zu detektieren und der Steuerung 11 ein entsprechendes Signal bereitzustellen (vgl. Fig. 1). Die Steuerung 11 (vgl. Fig. 1) stellt daraufhin bevorzugt ein Alarmsignal bereit.

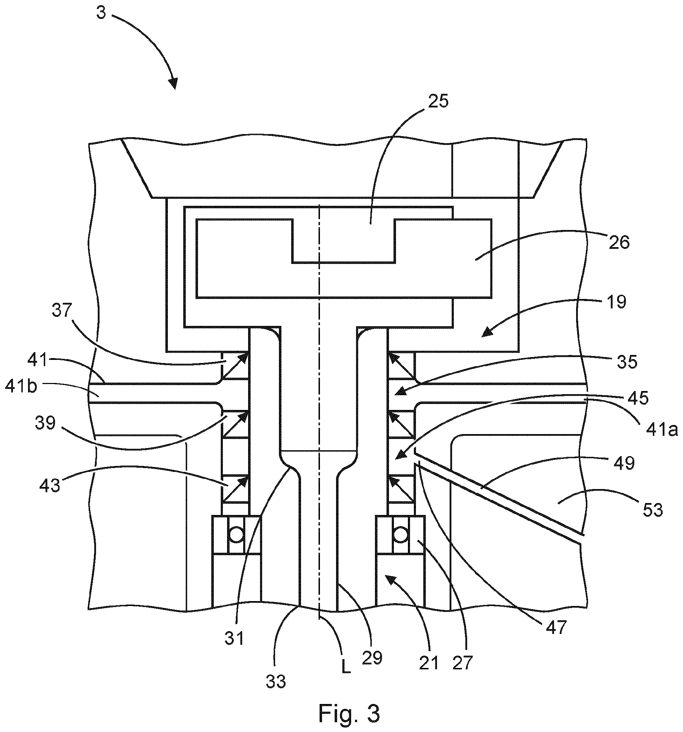

Das in Fig. 3 gezeigte Ausführungsbeispiel der Pumpe 3 unterscheidet sich von dem vorstehenden in Fig. 2 gezeigten Ausführungsbeispiel dadurch, dass Medien, die den Kontrollbereich 45 passieren, beabstandet zu dem Kontrollbereich 45, insbesondere auch außerhalb des Gehäuses 9 der Füllmaschine 1 (vgl. Fig. 1), detektiert bzw. anderweitig erkannt werden können. Hinsichtlich gleicher Bauteile sind gleiche Bezugszeichen verwendet und es wird auf die vorherigen Beschreibungen der Figuren 1 und 2 Bezug genommen.

Der Kontrollbereich 45 weist dafür eine Kontrollöffnung 47 auf, die in bekannter Weise mit einer Leitung 49, wie beispielsweise einem Abführschlauch, verbunden ist.

Die Leitung 49 ist derart ausgebildet, dass sie sich von der Kontrollöffnung 47 durch einen Abschnitt des Gehäuses 9 erstreckt und bevorzugt an einer Seitenwand des Gehäuses 9 aus der Füllmaschine 1 austritt (vgl. Fig. 1).

Pastöse Masse, Kontrollmedium oder andere Medien, wie insbesondere Getriebeöle, welche den Kontrollbereich 45 passieren, werden somit in die Leitung 49 geleitet. Diese führt zumindest einen Teil dieser Medien in einen zu dem Kontrollbereich 45 beabstandeten Bereich, insbesondere auch außerhalb des Gehäuses 9, sodass das Medium zur Kontrolle einfach zugänglich ist.

Die Detektion der Medien kann dabei entweder durch Bedienpersonal der Füllmaschine 1 (vgl. Fig. 1) erfolgen, beispielsweise durch eine Sichtprüfung, oder durch eine beabstandet zum Kontrollbereich 45, insbesondere auch außerhalb der Füllmaschine 1 angeordnete Sensoreinheit (nicht gezeigt). Die Sensoreinheit kann beispielsweise einen kapazitiven Sensor, einen Näherungsschalter, einen Feuchtigkeitssensor, einen optischen Sensor, einen Drucksensor oder einen Temperatursensor bzw. eine Kombination einer beliebigen Anzahl solcher Sensoren umfassen.

Die Leitung 49 kann bevorzugt ein Abführschlauch aus einem flexiblen Material, wie insbesondere einem Elastomer sein. Damit kann die Leitung 49 entsprechend dem vorhandenen Raum im Gehäuse 9 geformt und vorzugsweise an geeigneter Stelle aus dem Gehäuse 9 herausgeführt werden.

Im Übrigen wird auf die ausführliche Beschreibung der Pumpe 3 in Bezug auf die in Fig. 2 gezeigte Ausführungsform verwiesen.

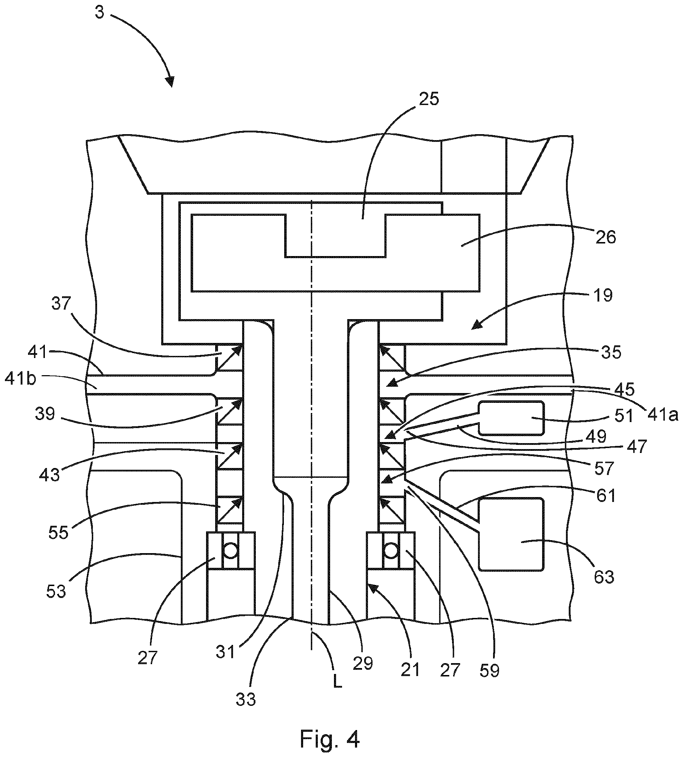

Die in Fig. 4 gezeigte Ausführungsform der Pumpe 3 unterscheidet sich von der vorstehend in Fig. 2 gezeigten Ausführungsform der Pumpe dadurch, dass der Kontrollbereich 45 ein erster Kontrollbereich ist und ferner ein zweiter Kontrollbereich 57 vorgesehen ist. Hinsichtlich gleicher Bauteile sind gleiche Bezugszeichen verwendet und es wird auf die vorherigen Beschreibungen der Figuren 2 und 3 Bezug genommen.

Der erste Kontrollbereich 45 weist, wie bereits in Fig. 2 gezeigt, eine erste Kontrollöffnung 47 auf, die mit einer ersten Leitung 49 verbunden ist, welche dazu eingerichtet ist, Medium aus dem ersten Kontrollbereich 45 zu einer Sensoreinheit 51 hinzuleiten. Die Sensoreinheit 51 ist eine erste Sensoreinheit und dazu eingerichtet, Medium in dem ersten Kontrollbereich 45 und/oder eine Verunreinigung des Mediums zu detektieren. Der erste Kontrollbereich 45 ist in Richtung der Längsrichtung L beabstandet und benachbart zu dem zweiten Kontrollbereich 57 angeordnet.

Der zweite Kontrollbereich 57 ist benachbart zu dem Getriebebereich 21 angeordnet. Dabei ist der zweite Kontrollbereich 57 einer zweiten Kontrolldichtung 55 derart vorgeschaltet angeordnet, dass aus dem Verarbeitungsbereich 19 austretende pastöse Masse zuerst den zweiten Kontrollbereich 57 und dann die zweite Kontrolldichtung 55 passiert. Die erste Kontrolldichtung 43 und die zweite Kontrolldichtung 55 sind zwischen einem Gehäuseteil 53 und der Antriebswelle 25 angeordnet.

Der zweite Kontrollbereich 57 und die zweite Kontrolldichtung 55 sind dem ersten Kontrollbereich 45 und der ersten Kontrolldichtung 43 dabei in Richtung der Längsrichtung L derart vorgeschaltet angeordnet, dass aus dem Getriebebereich 19 austretendes Medium, insbesondere Getriebeöl zuerst den zweiten Kontrollbereich 57 und anschließend die zweite Kontrolldichtung 55 passiert, bevor das Medium den ersten Kontrollbereich 45 und anschließend die erste Kontrolldichtung 43 passiert. Der zweite Kontrollbereich 57 weist eine zweite Kontrollöffnung 59 auf, die mit einer zweiten Leitung 61 verbunden ist, welche dazu eingerichtet ist, Medium aus dem zweiten Kontrollbereich 57 zu einer zweiten Sensoreinheit 63 hinzuleiten.

Gemäß einer alternativen bevorzugten Ausführungsform kann ferner nur eine Sensoreinheit bereitgestellt werden, welche dazu eingerichtet ist, Medien, welche den ersten Kontrollbereich 45 passieren, zu detektieren und zusätzlich Medien, welche den zweiten Kontrollbereich 57 passieren, zu detektieren.

Die eine Sensoreinheit 51 bzw. die erste Sensoreinheit 51 und die zweite Sensoreinheit 63 sind bevorzugt signalleitend mit einer Steuerung 11 der Füllmaschine 1 (vgl. Fig. 1) verbunden. Die Steuerung 11 ist in diesem Fall bevorzugt dazu eingerichtet, ein Alarmsignal bereitzustellen, wenn im ersten Kontrollbereich 45 und/oder im zweiten Kontrollbereich 57 ein Medium bzw. eine Menge an Medium, welche einen vordefinierten Grenzwert überschreitet, detektiert wird.

Im Betrieb ist es bevorzugt, dass die erste Sensoreinheit 51 beim Detektieren eines Mediums im ersten Kontrollbereich 45 ein erstes Sensorsignal bereitstellt und an die Steuerung 11 sendet. Die Steuerung 11 ist dazu eingerichtet nach Empfang des ersten Sensorsignals ein erstes Alarmsignal bereitzustellen, welches bevorzugt eine Warnmeldung umfasst. Durch das erste Alarmsignal wird bevorzugt eine erste Warnstufe eingeleitet. Die Warnmeldung wird vorzugsweise auf einer Anzeigevorrichtung 15 der Füllmaschine 1 angezeigt (vgl. Fig. 1). Diese Warnmeldung kann beispielsweise Hinweise enthalten, dass in einem vordefinierten Intervall eine Wartung des Dichtbereichs 35 empfohlen wird, um eine Kontamination des Getriebebereichs 21 bzw. des Verarbeitungsbereichs 19 zu verhindern.

Wird anschließend auch im zweiten Kontrollbereich 57 von der zweiten Sensoreinheit 63 ein Medium detektiert bzw. eine Menge an Medium, welche einen vordefinierten Grenzwert übersteigt, so wird ein zweites Sensorsignal von der zweiten Sensoreinheit 63 an die Steuerung 11 gesendet (vgl. Fig. 1). Die Sensoreinheit 11 ist dann bevorzugt dazu eingerichtet, ein zweites Alarmsignal bereitzustellen, welches eine zweite Warnstufe einleitet. In der zweiten Warnstufe wird dann beispielsweise auf der Anzeigeeinheit 15 eine Warnmeldung angezeigt. Diese Warnmeldung kann beispielsweise den Hinweis enthalten, den Betrieb nach Ablauf eines vordefinierten Zeitintervalls einzustellen bzw. eine Wartung des Dichtbereichs 35 durchzuführen.

Weiter bevorzugt kann nach der Bereitstellung eines Sensorsignals von der ersten Sensoreinheit 51 und/oder der zweiten Sensoreinheit 63 auch ein Signal an eine Verzögerungsschaltung (nicht gezeigt) bereitgestellt werden, welche signalleitend mit der Steuerung 11 (vgl. Fig. 1) verbunden ist. Die Verzögerungsschaltung ist in diesem Fall dazu eingerichtet, ein von der Steuerung 11 bereitgestelltes Signal zum Stoppen des Betriebs der Füllmaschine 1 (vgl. Fig. 1) erst nach Ablauf einer vordefinierten Verzögerungszeit an die betreffenden Komponenten der Füllmaschine, wie beispielsweise den Trichter 5, die Pumpe 3 bzw. die Ausbringeinheit 7 durchzustellen.

Somit wird die Betriebssicherheit erhöht und Schäden im Getriebebereich 21 sowie eine Kontamination der pastösen Masse im Verarbeitungsbereich 19 wirksam verhindert.

### Bezugszeichenliste

- 1: Füllmaschine
- 3: Pumpe
- 5: Trichter
- 7: Ausgabeeinrichtung
- 9: Gehäuse
- 11: Steuerung
- 13: Signalleitungen
- 15: Anzeigeeinheit
- 17: Alarmeinheit
- 19: Verarbeitungsbereich
- 21: Getriebebereich
- 23: Förderkammer
- 25: Rotor
- 26: Flügel
- 27: Getriebelagerung
- 29: Antriebswelle
- 31: abtriebsseitiger Endabschnitt
- 33: antriebsseitiger Endabschnitt
- 35: Dichtbereich
- 37: Primärdichtung
- 39: Sekundärdichtung
- 41: Versorgungskanal
- 41a: Einlassabschnitt
- 41b: Auslassabschnitt
- 43: erste Kontrolldichtung
- 45: erster Kontrollbereich
- 47: erste Kontrollöffnung
- 49: erste Leitung
- 51: erste Sensoreinheit
- 53: Gehäuseteil
- 55: zweite Kontrolldichtung
- 57: zweiter Kontrollbereich

- 59: zweite Kontrollöffnung
- 61: zweite Leitung
- 63: zweite Sensoreinheit
- L: Längsrichtung

## Patentansprüche

1. Pumpe (3), insbesondere Flügelzellen-Pumpe, mit
- einem Verarbeitungsbereich (19) mit einer Förderkammer (23) zum Aufnehmen einer pastösen Masse und einem Rotor (25) zum Fördern der pastösen Masse durch die Förderkammer (23),
- einer Antriebswelle (29) zum Antreiben des Rotors (25).
- einem Getriebebereich (21) zum Lagern der Antriebswelle (29), wobei sich die Antriebswelle (29) in einer Längsrichtung (L) von dem Verarbeitungsbereich (19) in den Getriebebereich (21) erstreckt, und
- einem in Längsrichtung (L) zwischen dem Verarbeitungsbereich (19) und dem Getriebebereich (21) angeordneten Dichtbereich (35) zum fluiddichten Trennen des Verarbeitungsbereichs (19) von dem Getriebebereich (21),
wobei der Dichtbereich (35) eine Primärdichtung (37), mindestens eine in Längsrichtung (L) beabstandet zu der Primärdichtung (37) angeordnete Sekundärdichtung (39) und einen Versorgungskanal (41) zur Bereitstellung eines Kontrollmediums zur Schmierung der Primärdichtung (37) und der Sekundärdichtung (39) umfasst,
**dadurch gekennzeichnet, dass** die Primärdichtung (37) derart benachbart zu dem Verarbeitungsbereich (19) angeordnet ist, dass das Kontrollmedium durch Passieren der Primärdichtung (37) aus dem Dichtbereich (35) in den Verarbeitungsbereich (19) gelangt, wobei der Dichtbereich (35) ferner eine benachbart zu dem Getriebebereich (21) angeordnete Kontrolldichtung (43, 55) und einen der Kontrolldichtung zugeordneten Kontrollbereich (45, 57) umfasst,
wobei der Kontrollbereich (45, 57) der Kontrolldichtung (43, 55) derart, vorzugsweise in Längsrichtung (L), vorgeschaltet angeordnet ist, dass aus dem Verarbeitungsbereich (19) und/oder dem Dichtbereich (35) austretendes Medium erst den Kontrollbereich (45, 57) und anschließend die Kontrolldichtung (43, 55) passiert.

2. Pumpe (3) nach Anspruch 1,
wobei der Kontrollbereich (45, 57) eine Kontrollöffnung (47, 59) zur Entnahme und Untersuchung von Medium aus dem Kontrollbereich (45, 57) aufweist.

3. Pumpe (3) nach Anspruch 2,
wobei die Pumpe (3) eine fluidleitend mit der Kontrollöffnung (47, 59) verbundene Leitung (49, 61) zum Ableiten des zu entnehmenden Mediums aufweist.

4. Pumpe (3) nach einem der vorstehenden Ansprüche,
wobei der Kontrollbereich (45, 57) eine Sensoreinheit (51, 63) zum Detektieren von Medium in dem Kontrollbereich (45, 57) aufweist.

5. Pumpe (3) nach Anspruch 4,
wobei die Sensoreinheit (51, 63) mindestens einen der folgenden umfasst:
- einen kapazitiven Sensor,
- einen Näherungsschalter,
- einen Feuchtigkeitssensor,
- einen optischen Sensor,
- einen Drucksensor, und
- einen Temperatursensor.

6. Pumpe (3) nach einem der vorstehenden Ansprüche,
wobei die Kontrolldichtung (43, 55) eine Radialwellendichtung und/oder eine Stopfbuchse umfasst.

7. Pumpe (3) nach einem der vorstehenden Ansprüche,
wobei die Kontrolldichtung (43, 55) zwischen Antriebswelle (29) und der Getriebelagerung (27) und/oder einem Gehäuseteil (53) angeordnet ist und an dem äußeren Umfang der Antriebswelle (29) dichtend anliegt.

8. Pumpe (3) nach einem der vorstehenden Ansprüche,
wobei der Versorgungskanal (41) als ein Ringkanal korrespondierend, insbesondere konzentrisch, zu der Antriebswelle (29) ausgebildet ist, mit einer Einlassöffnung zum Einführen von Kontrollmedium mit Schmiereigenschaft und einer Abführöffnung zum Abführen von Kontrollmedium mit Schmiereigenschaft, und vorzugsweise zwischen der Primärdichtung (37) und der Sekundärdichtung (39) angeordnet ist.

9. Pumpe (3) nach einem der vorstehenden Ansprüche,
wobei die Kontrolldichtung (43) eine erste Kontrolldichtung ist und der Kontrollbereich (45) ein erster Kontrollbereich ist, und
wobei der Dichtbereich (35) mindestens eine zweite Kontrolldichtung (55) aufweist, wobei der zweiten Kontrolldichtung (55) ein zweiter Kontrollbereich (57) zugeordnet ist, und
der zweite Kontrollbereich (57) der zweiten Kontrolldichtung (55) derart in Längsrichtung (L) vorgeschaltet angeordnet ist, dass aus dem Verarbeitungsbereich (19) austretende pastöse Masse und/oder aus dem Dichtbereich (35) austretendes Kontrollmedium mit Schmiereigenschaft jeweils erst den zweiten Kontrollbereich (57) und anschließend die zweite Kontrolldichtung (55) passiert.

10. Füllmaschine (1) zum Abfüllen pastöser Medien, mit
- einer Pumpe (3) nach einem der vorstehenden Ansprüche,
- einem mit der Förderkammer (23) der Pumpe (3) fluidleitend verbundenen Trichter (5) zum Zuführen der pastösen Masse in die Förderkammer (23), und
- einer mit der Förderkammer (23) der Pumpe (3) fluidleitend verbundenen Ausgabeeinrichtung (7) zum Abführen der pastösen Masse aus der Förderkammer (23).

11. Füllmaschine (1) nach Anspruch 10,
wobei die Pumpe (3) nach einem der Ansprüche 4 oder 5 ausgebildet ist und die Füllmaschine (1) ferner eine Steuerung (11) umfasst, die mit der Sensoreinheit (51, 63) signalleitend verbunden und dazu eingerichtet ist, die Sensorsignale auszuwerten und ein Alarmsignal bereitzustellen, wenn in dem Kontrollbereich (45, 57) Medium detektiert wird und/oder die in dem Kontrollbereich (45, 57) detektierte Menge oder der Grad der Verunreinigung des Mediums einen vordefinierten Grenzwert übersteigt.

12. Füllmaschine (1) nach Anspruch 11,
ferner umfassend eine mit der Steuerung (11) signalleitend verbundene Anzeigeeinheit (15) zum Anzeigen einer Warnmeldung, wenn die Steuerung (11) ein Alarmsignal bereitstellt.

13. Füllmaschine (1) nach einem der Ansprüche 11 oder 12,
ferner umfassend eine mit der Steuerung (11) signalleitend verbundene Alarmeinheit (17) zum Bereitstellen eines optischen und/oder akustischen Alarms, in Reaktion auf ein von der Steuerung (11) bereitgestelltes Alarmsignal.

14. Füllmaschine (1) nach einem der Ansprüche 11 bis 13,
ferner umfassend eine mit der Steuerung (11) signalleitend verbundene Verzögerungsschaltung zum Vorgeben einer Verzögerungszeit, in Reaktion auf ein von der Steuerung (11) bereitgestelltes Alarmsignal,
wobei die Steuerung (11) dazu eingerichtet ist, den Betrieb der Füllmaschine (1) nach Ablauf der Verzögerungszeit zu unterbrechen.

15. Verfahren zum Betrieb einer Füllmaschine (1), insbesondere einer Füllmaschine (1) nach einem der Ansprüche 10 bis 14, umfassend die Schritte:
- Aufnehmen und Fördern einer pastösen Masse in einer Förderkammer (23) und Fördern der pastösen Masse durch die Förderkammer (23) mittels eines drehgebend mit einer Antriebswelle (29) gekoppelten Rotors (25),
wobei die Förderkammer (23) und der Rotor (25) einem Verarbeitungsbereich (19) der Füllmaschine (1) zugeordnet sind und sich die Antriebswelle (29) von einem Verarbeitungsbereich (19) in einen Getriebebereich (21) in einer Längsrichtung (L) erstreckt,
- Bereitstellung von Kontrollmedium mit Schmiereigenschaft in einem Dichtbereich (35) zur Schmierung einer Primärdichtung (37) und einer Sekundärdichtung (39) mittels eines Versorgungskanals (41), wobei die Primärdichtung (37) derart benachbart zu dem Verarbeitungsbereich (19) angeordnet ist, dass das Kontrollmedium durch Passieren der Primärdichtung (37) aus dem Dichtbereich (35) in den Verarbeitungsbereich (19) gelangt,
- Detektieren von Medium, insbesondere Kontrollmedium mit Schmiereigenschaft und/oder pastöser Masse und/oder Getriebeöl, in einem einer Kontrolldichtung (43, 55) zugeordneten Kontrollbereich (45, 57),
wobei die Kontrolldichtung (43, 55) benachbart zu einem Getriebebereich (21) der Füllmaschine (1) angeordnet ist und der Kontrollbereich (45, 57) der Kontrolldichtung (43, 55), derart in Längsrichtung (L) vorgeschaltet angeordnet ist, dass aus dem Verarbeitungsbereich (19) und/oder dem Dichtbereich (35) austretendes Medium erst den Kontrollbereich (45, 57) und anschließend die Kontrolldichtung (43, 55) passiert.

## Claims

1. Pump (3), in particular vane pump, with
- a processing region (19) with a conveying chamber (23) for receiving a pasty mass and a rotor (25) for conveying the pasty mass through the conveying chamber (23),
- a drive shaft (29) for driving the rotor (25),
- a gear region (21) for supporting the drive shaft (29), wherein the drive shaft (29) extends in a longitudinal direction (L) from the processing region (19) into the gear region (21), and
- a sealing region (35) arranged in the longitudinal direction (L) between the processing region (19) and the gear region (21) for fluid-tight separation of the processing region (19) from the gear region (21),
wherein the sealing region (35) comprises a primary seal (37), at least one secondary seal (39) arranged at a distance from the primary seal (37) in the longitudinal direction (L) and a supply channel (41) for providing a control medium for lubricating the primary seal (37) and the secondary seal (39),
**characterized in that** the primary seal (37) is arranged adjacent to the processing region (19) in such a way that the control medium enters the processing region (19) from the sealing region (35) by passing through the primary seal (37),
wherein the sealing region (35) further comprises a control seal (43, 55) arranged adjacent to the gear region (21) and a control region (45, 57) associated with the control seal,
wherein the control region (45, 57) is arranged upstream of the control seal (43, 55), preferably in the longitudinal direction (L), in such a way that medium emerging from the processing region (19) and/or the sealing region (35) first passes the control region (45, 57) and then the control seal (43, 55).

2. Pump (3) according to claim 1,
wherein the control region (45, 57) has a control opening (47, 59) for removing and examining medium from the control region (45, 57).

3. Pump (3) according to claim 2,
wherein the pump (3) has a conduit (49, 61) connected in a fluid-conducting manner to the control opening (47, 59) for discharging the medium to be removed.

4. Pump (3) according to one of the preceding claims,
wherein the control region (45, 57) comprises a sensor unit (51, 63) for detecting medium in the control region (45, 57).

5. Pump (3) according to claim 4,
wherein the sensor unit (51, 63) comprises at least one of the following:
- a capacitive sensor,
- a proximity switch,
- a humidity sensor,
- an optical sensor,
- a pressure sensor, and
- a temperature sensor.

6. Pump (3) according to one of the preceding claims,
wherein the control seal (43, 55) comprises a radial shaft seal and/or a stuffing box.

7. Pump (3) according to one of the preceding claims,
wherein the control seal (43, 55) is arranged between the drive shaft (29) and the gearbox bearing (27) and/or a housing part (53) and bears sealingly against the outer circumference of the drive shaft (29).

8. Pump (3) according to one of the preceding claims,
wherein the supply channel (41) is designed as an annular channel corresponding, in particular concentrically, to the drive shaft (29), with an inlet opening for introducing control medium with lubricating properties and a discharge opening for discharging control medium with lubricating properties, and is preferably arranged between the primary seal (37) and the secondary seal (39).

9. Pump (3) according to one of the preceding claims,
wherein the control seal (43) is a first control seal and the control region (45) is a first control region, and
wherein the sealing region (35) comprises at least one second control seal (55), wherein a second control region (57) is associated with the second control seal (55), and
the second control region (57) is arranged upstream of the second control seal (55) in the longitudinal direction (L) in such a way that pasty mass emerging from the processing region (19) and/or control medium with lubricating properties emerging from the sealing region (35) first passes the second control region (57) and then the second control seal (55).

10. Filling machine (1) for filling pasty media, with
- a pump (3) according to one of the preceding claims,
- a hopper (5) connected in a fluid-conducting manner to the conveying chamber (23) of the pump (3) for feeding the pasty mass into the conveying chamber (23), and
- a discharge device (7) connected in a fluid-conducting manner to the conveying chamber (23) of the pump (3) for discharging the pasty mass from the conveying chamber (23).

11. Filling machine (1) according to claim 10,
wherein the pump (3) is designed according to one of claims 4 or 5 and the filling machine (1) further comprises a controller (11) which is connected to the sensor unit (51, 63) in a signal-conducting manner and is set up to evaluate the sensor signals and to provide an alarm signal if medium is detected in the control region (45, 57) and/or the quantity detected in the control region (45, 57) or the degree of contamination of the medium exceeds a predefined limit value.

12. Filling machine (1) according to claim 11,
further comprising a display unit (15) connected to the controller (11) in a signal-conducting manner for displaying a warning message when the controller (11) provides an alarm signal.

13. Filling machine (1) according to any one of claims 11 or 12,
further comprising an alarm unit (17) connected to the controller (11) in a signal-conducting manner for providing a visual and/or audible alarm, in response to an alarm signal provided by the controller (11).

14. Filling machine (1) according to any one of claims 11 to 13,
further comprising a delay circuit connected to the controller (11) in a signal-conducting manner for presetting a delay time in response to an alarm signal provided by the controller (11),
wherein the controller (11) is arranged to interrupt the operation of the filling machine (1) after the delay time has elapsed.

15. Method for operating a filling machine (1), in particular a filling machine (1) according to one of claims 10 to 14, comprising the steps of
- receiving and conveying a pasty mass in a conveying chamber (23) and conveying the pasty mass through the conveying chamber (23) by means of a rotor (25) rotationally coupled to a drive shaft (29),
wherein the conveying chamber (23) and the rotor (25) are associated with a processing region (19) of the filling machine (1) and the drive shaft (29) extends from a processing region (19) into a gear region (21) in a longitudinal direction (L),
- provision of control medium with lubricating properties in a sealing region (35) for lubricating a primary seal (37) and a secondary seal (39) by means of a supply channel (41), the primary seal (37) being arranged adjacent to the processing region (19) in such a way that the control medium passes from the sealing region (35) into the processing region (19) by passing through the primary seal (37),
- detecting of medium, in particular control medium with lubricating property and/or pasty mass and/or gear oil, in a control region (45, 57) associated with a control seal (43, 55),
wherein the control seal (43, 55) is arranged adjacent to a gear region (21) of the filling machine (1) and the control region (45, 57) is arranged upstream of the control seal (43, 55) in the longitudinal direction (L) in such a way that medium emerging from the processing region (19) and/or the sealing region (35) first passes the control region (45, 57) and then the control seal (43, 55).

## Revendications

1. Pompe (3), en particulier pompe à palettes, avec
- une zone de traitement (19) avec une chambre de convoyage (23) destinée à recevoir une masse pâteuse et un rotor (25) destiné à convoyer la masse pâteuse à travers la chambre de convoyage (23),
- un arbre d'entraînement (29) destiné à entraîner le rotor (25),
- une zone de transmission (21) destinée à monter l'arbre d'entraînement (29), dans laquelle l'arbre d'entraînement (29) s'étend dans une direction longitudinale (L) de la zone de traitement (19) dans la zone de transmission (21), et
- une zone d'étanchéité (35) disposée dans la direction longitudinale (L) entre la zone de traitement (19) et la zone de transmission (21) pour séparer de manière étanche aux fluides la zone de traitement (19) de la zone de transmission (21),
dans laquelle la zone d'étanchéité (35) comprend un joint d'étanchéité primaire (37), au moins un joint d'étanchéité secondaire (39) disposé dans la direction longitudinale (L) de manière éloignée du joint d'étanchéité primaire (37) et un canal d'alimentation (41) destiné à fournir un milieu de contrôle pour la lubrification du joint d'étanchéité primaire (37) et du joint d'étanchéité secondaire (39), **caractérisé en ce que** le joint d'étanchéité primaire (37) est disposé de manière adjacente à la zone de traitement (19) de telle manière que le milieu de contrôle parvient hors de la zone d'étanchéité (35) dans la zone de traitement (19) en traversant le joint d'étanchéité primaire (37),
dans laquelle la zone d'étanchéité (35) comprend en outre un joint d'étanchéité de contrôle (43, 55) disposé de manière adjacente à la zone de transmission (21) et une zone de contrôle (45, 57) associée au joint d'étanchéité de contrôle,
dans laquelle la zone de contrôle (45, 57) du joint d'étanchéité de contrôle (43, 55) est disposée, de préférence dans la direction longitudinale (L), en amont de telle manière qu'un milieu sortant de la zone de traitement (19) et/ou de la zone d'étanchéité (35) traverse d'abord la zone de contrôle (45, 57) puis le joint d'étanchéité de contrôle (43, 55).

2. Pompe (3) selon la revendication 1,
dans laquelle la zone de contrôle (45, 57) présente une ouverture de contrôle (47, 59) pour prélever et examiner le milieu provenant de la zone de contrôle (45, 57).

3. Pompe (3) selon la revendication 2,
dans laquelle la pompe (3) présente une conduite (49, 61), reliée à l'orifice de contrôle (47, 59), d'acheminement de fluide pour évacuer le milieu à prélever.

4. Pompe (3) selon l'une quelconque des revendications précédentes, dans laquelle la zone de contrôle (45, 57) présente une unité de capteur (51, 63) destinée à détecter le milieu dans la zone de contrôle (45, 57).

5. Pompe (3) selon la revendication 4,
dans laquelle l'unité de capteur (51, 63) comprend au moins un des éléments suivants :
- un capteur capacitif,
- un détecteur de proximité,
- un capteur d'humidité,
- un capteur optique,
- un capteur de pression, et
- un capteur de température.

6. Pompe (3) selon l'une quelconque des revendications précédentes,
dans laquelle le joint d'étanchéité de contrôle (43, 55) comprend un joint d'étanchéité d'arbre radial et/ou un presse-étoupe.

7. Pompe (3) selon l'une quelconque des revendications précédentes,
dans laquelle le joint d'étanchéité de contrôle (43, 55) est disposé entre l'arbre d'entraînement (29) et le palier de transmission (27) et/ou une partie de boîtier (53) et repose de manière étanche sur la périphérie extérieure de l'arbre d'entraînement (29).

8. Pompe (3) selon l'une quelconque des revendications précédentes,
dans laquelle le canal d'alimentation (41) est réalisé en tant que canal annulaire de manière correspondante, en particulier de manière concentrique, par rapport à l'arbre d'entraînement (29), avec une ouverture d'entrée pour l'introduction de milieu de contrôle avec une propriété lubrifiante et une ouverture d'évacuation pour l'évacuation de milieu de contrôle avec une propriété lubrifiante, et est disposé de préférence entre le joint d'étanchéité primaire (37) et le joint d'étanchéité secondaire (39).

9. Pompe (3) selon l'une quelconque des revendications précédentes,
dans laquelle le joint d'étanchéité de contrôle (43) est un premier joint d'étanchéité de contrôle et la zone de contrôle (45) est une première zone de contrôle, et
dans laquelle la zone d'étanchéité (35) présente au moins un deuxième joint d'étanchéité de contrôle (55), dans laquelle une deuxième zone de contrôle (57) est associée au deuxième joint d'étanchéité de contrôle (55), et
la deuxième zone de contrôle (57) du deuxième joint d'étanchéité de contrôle (55) est disposée en amont dans la direction longitudinale (L) de telle manière que la masse pâteuse sortant de la zone de traitement (19) et/ou le milieu de contrôle avec une propriété lubrifiante sortant de la zone d'étanchéité (35) traversent respectivement d'abord la deuxième zone de contrôle (57) puis le deuxième joint d'étanchéité de contrôle (55).

10. Machine de remplissage (1) pour le transvasement de milieux pâteux, avec
- une pompe (3) selon l'une quelconque des revendications précédentes,
- un entonnoir (5) relié à la chambre de convoyage (23) de la pompe (3) de manière à acheminer un fluide, destiné à amener la masse pâteuse dans la chambre de convoyage (23), et
- un dispositif de distribution (7) relié à la chambre de convoyage (23) de la pompe (3) de manière à acheminer un fluide, destiné à évacuer la masse pâteuse hors de la chambre de convoyage (23).

11. Machine de remplissage (1) selon la revendication 10,
dans laquelle la pompe (3) est réalisée selon l'une quelconque des revendications 4 ou 5 et la machine de remplissage (1) comprend en outre une commande (11), qui est reliée par acheminement de signaux à l'unité de capteur (51, 63) et est mise au point pour évaluer les signaux de capteur et fournir un signal d'alarme lorsque du milieu est détecté dans la zone de contrôle (45, 57) et/ou que la quantité détectée dans la zone de contrôle (45, 57) ou le degré d'impureté du milieu dépasse une valeur limite prédéfinie.

12. Machine de remplissage (1) selon la revendication 11,
comprenant en outre une unité d'affichage (15) reliée avec acheminement de signaux à la commande (11), destinée à afficher un message d'avertissement lorsque la commande (11) fournit un signal d'alarme.

13. Machine de remplissage (1) selon l'une quelconque des revendications 11 ou 12,
comprenant en outre une unité d'alarme (17) reliée avec acheminement de signaux à la commande (11), destinée à fournir une alarme optique et/ou sonore, en réponse à un signal d'alarme fourni par la commande (11).

14. Machine de remplissage (1) selon l'une quelconque des revendications 11 à 13,
comprenant en outre un circuit de temporisation relié avec acheminement de signaux à la commande (11), destiné à prévoir un temps de temporisation, en réponse à un signal d'alarme fourni par la commande (11),
dans laquelle la commande (11) est mise au point pour interrompre le fonctionnement de la machine de remplissage (1) une fois le temps de temporisation écoulé.

15. Procédé de fonctionnement d'une machine de remplissage (1), en particulier d'une machine de remplissage (1) selon l'une quelconque des revendications 10 à 14, comprenant les étapes :
- de réception et de convoyage d'une masse pâteuse dans une chambre de convoyage (23) et de convoyage de la masse pâteuse à travers la chambre de convoyage (23) au moyen d'un rotor (25) couplé en rotation à un arbre d'entraînement (29),
dans lequel la chambre de convoyage (23) et le rotor (25) sont associés à une zone de traitement (19) de la machine de remplissage (1) et l'arbre d'entraînement (29) s'étend d'une zone de traitement (19) dans une zone de transmission (21) dans une direction longitudinale (L),
- de fourniture d'un milieu de contrôle avec une propriété lubrifiante dans une zone d'étanchéité (35) pour la lubrification d'un joint d'étanchéité primaire (37) et d'un joint d'étanchéité secondaire (39) au moyen d'un canal d'alimentation (41), dans lequel le joint d'étanchéité primaire (37) est disposé de manière adjacente à la zone de traitement (19) de telle manière que le milieu de contrôle parvient hors de la zone d'étanchéité (35) dans la zone de traitement (19) en traversant le joint d'étanchéité primaire (37),
- de détection de milieu, en particulier de milieu de contrôle avec une propriété lubrifiante et/ou de masse pâteuse et/ou d'huile de transmission, dans une zone de contrôle (45, 57) associée à un joint d'étanchéité de contrôle (43, 55),
dans lequel le joint d'étanchéité de contrôle (43, 55) est disposé de manière adjacente à une zone de transmission (21) de la machine de remplissage (1) et la zone de contrôle (45, 57) du joint d'étanchéité de contrôle (43, 55) est disposée en amont dans la direction longitudinale (L) de telle manière que le milieu sortant de la zone de traitement (19) et/ou de la zone d'étanchéité (35) traverse d'abord la zone de contrôle (45, 57) puis le joint d'étanchéité de contrôle (43, 55).
